# FASCICULE DE BREVET EUROPEEN

(11) **EP 3 970 336 B1**
(45) Date de publication et mention de la délivrance du brevet: **05.03.2025**
(21) Numéro de dépôt: 20715894.0
(22) Date de dépôt: 06.04.2020
(51) Int. Cl.: H04L 9/40, H04W 12/04

(54) **PROCÉDÉ DE GESTION D'UNE INFORMATION DE SÉCURITÉ DANS UN RÉSEAU DE COMMUNICATION, DISPOSITIF, ÉQUIPEMENT D'ACCÈS AUDIT RÉSEAU, PROCÉDÉ DE GESTION D'UNE CONNEXION AUDIT RÉSEAU, DISPOSITIF, ÉQUIPEMENT TERMINAL ET PROGRAMMES D'ORDINATEUR CORRESPONDANTS**
VERFAHREN ZUR VERWALTUNG EINER SICHERHEITSINFORMATION IN EINEM KOMMUNIKATIONSNETZ, ENTSPRECHENDE VORRICHTUNG, EINRICHTUNG ZUM ZUGRIFF AUF DAS NETZWERK UND COMPUTERPROGRAMME
METHOD FOR MANAGING A PIECE OF SECURITY INFORMATION IN A COMMUNICATION NETWORK, CORRESPONDING DEVICE, EQUIPMENT FOR ACCESSING THE NETWORK AND COMPUTER PROGRAMS

(30) Priorité: 15.05.2019 FR 1905046
(43) Date de publication de la demande: 23.03.2022
(73) Titulaire: Orange, 92130 Issy-les-Moulineaux (FR)
(72) Inventeur: LE GUILLOU, Xavier, 92326 CHÂTILLON CEDEX (FR); BRICHETEAU, Dimitri, 92326 CHATILLON CEDEX (FR)
(74) Mandataire: Vidon Brevets & Stratégie
(86) Numéro de dépôt international: PCT/EP2020/059715
(87) Numéro de publication internationale: WO 2020/229057

(56) Documents cités:
- EP-A1- 2 276 278

## Description

### Domaine de l'invention

Le domaine de l'invention est celui des réseaux de communication, en particulier des réseaux de communication sans fil.

L'invention concerne la gestion d'une information de sécurité dans un tel réseau de communication, ladite information de sécurité étant utilisée pour établir une connexion sécurisée entre un équipement terminal et un équipement d'accès audit réseau.

Elle trouve notamment une application pour améliorer la sécurité des réseaux WIFI domestiques qui sont actuellement soumis à des risques d'attaques majorés.

### Art antérieur et ses inconvénients

La gestion de la sécurité des réseaux WiFi domestiques est problématique. Si les réseaux WiFi d'entreprise peuvent s'appuyer sur une authentification forte, il n'en est pas de même pour les réseaux domestiques dont la sécurité repose sur la force d'une « clé WiFi » pré-partagée ou PSK (pour « Pre-Shared Key », en anglais) entre un équipement d'accès audit réseau, ou point d'accès AP et des équipements terminaux, ou stations STA, qui souhaitent s'y connecter.

Or, l'utilisation d'une telle clé Wifi présente aujourd'hui les inconvénients suivants :
- Les clés définies par un fabricant d'équipements ou un opérateur de réseau sont sûres mais difficiles voire impossible à retenir pour un utilisateur;
- Les clés modifiées par les utilisateurs ont souvent un niveau de sécurité très faible ;
- il est pratiquement impossible de révoquer un accès accordé à un invité sur le réseau domestique.

En outre, le risque d'attaques est majoré aujourd'hui par le fait qu'il existe des processeurs de cartes graphiques ou GPU (pour « Graphical Processing Unit », en anglais) devenus suffisamment puissants et rapides pour que ces attaques sur les clés WiFi puissent désormais être lancées hors-ligne, sur la base d'une capture préalable de trafic WiFi.

On connaît du document FR3032582, publié en août 2016 par l'INPI, un procédé de gestion de la durée d'une connexion sécurisée, qui propose une technique pour évaluer une robustesse d'un mot de passe et déterminer une durée de validité de ce mot de passe et donc de connexion en fonction de la robustesse évaluée. Toutefois, ce document n'enseigne pas de solution pour gérer un changement de mot de passe ou plus généralement d'information de sécurité partagée par un équipement terminal et un équipement d'accès à un réseau de communication. Le document EP 2 276 278 A1 publié le 19 janvier 2011 divulgue des procédés et des appareils pour maintenir des connexions sécurisées dans un réseau de communication sans fil.

Il existe donc un besoin d'une technique de gestion d'une information de sécurité dans un réseau de communication, qui ne présente pas les inconvénients de l'art antérieur.

Un autre besoin est celui d'une technique de gestion d'une information de sécurité dans un réseau de communication qui contribue à diminuer le risque d'attaques sans pour autant rendre plus contraignante l'accès au réseau pour un utilisateur d'un équipement terminal.

### Exposé de l'invention

L'invention répond à ce besoin en proposant un procédé de gestion d'une information de sécurité, dite première information de sécurité, destinée à être mise en œuvre pour établir une connexion sécurisée entre au moins un équipement terminal et un équipement d'accès à un réseau de communication, ladite première information de sécurité étant associée à une durée de validité, ledit procédé mis en œuvre par ledit équipement d'accès et en ce qu'il comprend:
- A l'expiration de la durée de validité, l'obtention d'une deuxième information de sécurité et le déclenchement d'un délai de désactivation de la première information de sécurité;
- Si undit équipement terminal est connecté à l'équipement d'accès, la transmission audit équipement terminal d'un message de commande de réauthentification comprenant au moins la deuxième information de sécurité et un délai de réauthentification, ledit délai de réauthentification expirant avant la fin dudit délai de désactivation de la première information de sécurité; et
- Si un message de requête de réauthentification est reçu en provenance de l'équipement terminal avant l'expiration du délai de réauthentification, réauthentification de l'équipement terminal à l'aide de la deuxième information de sécurité sans extinction de la connexion.

Ainsi l'invention repose sur une approche tout-à-fait nouvelle et inventive de la sécurisation d'une connexion dans un réseau de communication, selon laquelle une information de sécurité partagée par un équipement d'accès au réseau et un équipement terminal enregistré dans le réseau est renouvelée régulièrement à l'initiative de l'équipement d'accès. Elle offre en outre à tout équipement terminal connecté au réseau au moment du renouvellement, la possibilité de se réauthentifier sans coupure du réseau pendant une période temporelle limitée où la première et la deuxième informations de sécurité sont simultanément valides.

L'information de sécurité est par exemple une clé choisie par l'équipement d'accès ou le terminal dans un dictionnaire plus réduit que celui couramment utilisé dans l'art antérieur et elle est associée à une durée de validité déterminée en fonction d'une robustesse de la clé. Cette durée de validité peut être relativement courte, et par exemple être comprise entre une journée et quelques semaines.

Selon un aspect de l'invention, le procédé comprend, suite au déclenchement du délai de désactivation et sur réception d'un message de requête d'établissement d'une connexion d'un équipement terminal comprenant ladite première information de sécurité, une vérification d'au moins une condition de reconnexion, ladite au moins condition comprenant au moins la non-expiration d'un délai de reconnexion, ledit délai de reconnexion expirant au plus tôt à la fin du délai de désactivation de la première information de sécurité, et
si ladite au moins une condition de reconnexion est satisfaite :
- l'établissement de la connexion de l'équipement terminal sur la base de la première information de sécurité; et
- la transmission audit équipement terminal d'un message de requête de réauthentification comprenant au moins la deuxième information de sécurité et un délai de réauthentification.

De la sorte, un équipement terminal déjà enregistré au réseau avant le renouvellement de l'information de sécurité, peut continuer pendant un certain délai à se connecter au réseau à partir de la première information de sécurité. L'équipement d'accès profite de la connexion ainsi établie pour lui transmettre de façon sécurisée la deuxième information de sécurité. Il lui accorde alors un délai pour se ré-authentifier, qui peut être avantageusement paramétrable, commence à courir à la transmission du message de requête et n'expire pas avant que la première information de sécurité soit désactivée.

Selon un autre aspect de l'invention, le délai de reconnexion expire à la fin du délai de désactivation de la première information de sécurité.

Une première condition à satisfaire est que la requête d'établissement d'une connexion intervienne dans le délai de désactivation de la première information de sécurité, c'est-à-dire tant qu'elle est encore active.

Un avantage est de ne pas imposer à l'équipement d'accès de gérer deux informations de sécurité à la fois, clés ou mots de passe, donc deux procédures de connexion distinctes, pendant une période trop longue.

Selon encore un autre aspect de l'invention, le délai de reconnexion expire à la fin d'un délai de grâce déclenché à l'expiration du délai de désactivation de la première information de sécurité.

A défaut de satisfaire la première condition, il est au moins exigé que la requête d'établissement d'une connexion sur la base de la première information de sécurité intervienne dans un délai de grâce qui commence à courir à l'expiration du délai de désactivation de cette première information de sécurité.

Un avantage d'un délai plus long est de rendre la procédure de renouvellement des informations de sécurités plus flexible et de permettre à un plus grand nombre d'équipements terminaux de mettre à jour facilement leurs informations de sécurité.

Selon encore un autre aspect de l'invention, ledit équipement terminal ayant été préalablement enregistré dans le réseau en association avec une information de confiance, ladite étape de vérification d'au moins une condition de reconnexion vérifie en outre que ladite information de confiance est positionnée à une valeur «*digne de confiance* ».

Ainsi, pendant le délai de grâce, seuls les équipement terminaux enregistrés comme dignes de confiance ont la possibilité de se reconnecter au réseau avec la première information de sécurité. Un avantage est d'augmenter le niveau de sécurité en écartant les équipements terminaux invités auxquels l'administrateur du réseau n'a pas accordé ce statut.

Selon encore un autre aspect de l'invention, le procédé comprend la détermination d'une liste d'au moins un équipement terminal enregistré dans le réseau avec l'information de confiance positionnée à la valeur « *digne de confiance* » préalablement au déclenchement du délai de désactivation de la première information de sécurité, et n'ayant pas encore émis de requête de connexion, et l'émission d'un message de notification à destination dudit au moins un équipement terminal avant l'expiration du délai de grâce.

Un avantage est que l'équipement d'accès informe les équipements terminaux dignes de confiance de l'opportunité qu'ils ont de mettre facilement à jour leur information de sécurité avant de déclarer la première information définitivement obsolète. Une fois le délai expiré, ils devront réinitier une procédure complète d'enregistrement au réseau.

Par exemple, les objets communicants qui sont normalement connectés en permanence au réseau, recevront la notification de changement d'information de sécurité par le réseau WiFi. Pour un équipement terminal non connecté au réseau wifi, l'équipement d'accès dispose par exemple d'un numéro de téléphone mobile associé à l'équipement terminal et lui transmet cette notification par SMS.

Selon encore un autre aspect de l'invention, à l'expiration du délai de grâce, un délai de grâce supplémentaire est déclenché tant que la liste n'est pas vide.

De la sorte, on s'assure qu'aucun équipement terminal digne de confiance ne soit obligé de se réenregistrer, ce qui serait fastidieux. Bien sûr, on peut envisager que le nouveau délai de grâce soit choisi plus court que le précédent et aussi limiter le nombre de renouvellements de façon à garantir un niveau de sécurité suffisant.

L'invention concerne également un produit programme d'ordinateur comprenant des instructions de code de programme pour la mise en œuvre d'un procédé de gestion d'une information de sécurité dans un réseau de communication tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé de gestion selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de gestion précité.

L'invention concerne également un dispositif de gestion d'une information de sécurité, dite première information de sécurité, destinée à être mise en œuvre pour établir une connexion sécurisée entre au moins un équipement terminal et un équipement d'accès à un réseau de communication, ladite première information de sécurité étant associée à une première durée de validité.

Ledit dispositif est configuré pour :
- A l'expiration de la première durée de validité, obtenir une deuxième information de sécurité et déclencher un délai de désactivation de la première information de sécurité;
- Si undit équipement terminal est connecté à l'équipement d'accès, transmettre audit équipement terminal un message de requête de réauthentification comprenant au moins la deuxième information de sécurité et un délai de réauthentification, ledit délai de réauthentification expirant avant la fin dudit délai de désactivation de la première information de sécurité; et
- Si un message de requête de réauthentification est reçu en provenance de l'équipement terminal avant l'expiration du délai de réauthentification, réauthentification de l'équipement terminal à l'aide de la deuxième information de sécurité sans extinction de la connexion.

Plus généralement, un tel dispositif est apte à mettre en œuvre un procédé de gestion d'une information de sécurité tel que décrit précédemment.

Avantageusement, ledit dispositif est intégré dans un équipement d'accès à un réseau de communication, par exemple une passerelle résidentielle ou d'entreprise.

L'équipement d'accès, le dispositif de gestion et le programme d'ordinateur correspondants précités présentent au moins les mêmes avantages que ceux conférés par le procédé de gestion selon la présente invention.

Corrélativement l'invention concerne aussi un procédé de gestion d'une connexion d'un équipement terminal à un réseau de communication, comprenant un équipement d'accès audit réseau, ladite connexion étant sécurisée par une première information de sécurité.

Ledit procédé est mis en œuvre par ledit équipement terminal et comprend :
- Lorsqu'il est connecté audit réseau, réception en provenance dudit équipement d'accès via une connexion au réseau de communication d'un message de commande de réauthentification, comprenant au moins une deuxième information de sécurité et un délai de réauthentification (inférieur ou égal à un délai de désactivation de la première information de sécurité,
- Emission, dans le délai de réauthentification, d'un message de requête de réauthentification audit équipement d'accès comprenant la deuxième information de sécurité, et enregistrement de la deuxième information de sécurité à la place de la première information de sécurité.

Selon l'invention, l'équipement terminal adapte son comportement pour mettre à jour ses informations de connexion dans le délai de désactivation fixé par l'équipement d'accès.

Selon un autre aspect de l'invention, le procédé comprend :
- Lorsqu'il n'est pas connecté audit réseau, la réception d'un message de notification de changement d'information de sécurité par l'intermédiaire d'une interface avec un autre réseau de communication, ledit message comprenant un délai de reconnexion audit réseau, ledit délai expirant au plus tôt à la fin du délai de désactivation de la première information de sécurité, et
- l'émission d'un message de requête de reconnexion au réseau de communication dans ledit délai.

Selon encore un autre aspect de l'invention, le procédé comprend en outre la détermination d'un instant d'émission dudit message de requête de réauthentification à destination dudit équipement d'accès dans le délai de réauthentification.

Ce mode de réalisation s'applique avantageusement au cas où le délai de désactivation est commun à tous les équipements d'accès. Le fait que les équipements terminaux déterminent chacun leur propre instant d'émission de leur requête de connexion, par exemple aléatoirement, permet de lisser la charge au niveau de l'équipement d'accès.

L'invention concerne également un produit programme d'ordinateur comprenant des instructions de code de programme pour la mise en œuvre d'un procédé de gestion d'une connexion à un réseau de communication tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé de gestion selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de gestion précité.

L'invention concerne également un dispositif de gestion d'une connexion d'un équipement terminal à un réseau de communication, comprenant un équipement d'accès audit réseau, ladite connexion étant sécurisée par une première information de sécurité.

Ledit dispositif est configuré pour :
- recevoir un message de commande de réauthentification en provenance de l'équipement d'accès via une connexion audit réseau, ledit message comprenant au moins une deuxième information de sécurité et un délai de réauthentification, ledit délai expirant au plus tôt à la fin du délai de désactivation de la première information de sécurité; et
- émettre dans le délai de réauthentification un message de requête de réauthentification à destination dudit équipement d'accès comprenant la deuxième information de sécurité.

Plus généralement, un tel dispositif est apte à mettre en œuvre un procédé de gestion d'une connexion tel que décrit précédemment.

Avantageusement, ledit dispositif est intégré dans un équipement terminal.

L'équipement terminal, le dispositif de gestion d'une connexion et le programme d'ordinateur correspondants précités présentent au moins les mêmes avantages que ceux conférés par le procédé de gestion selon la présente invention.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig. 1****]** Cette figure représente de façon schématique un exemple de réseau de communication local géré par un équipement d'accès, auquel se connecte une pluralité d'équipements terminaux, selon un mode de réalisation de l'invention;
**[****Fig. 2****]** Cette figure représente sous forme de logigramme les différentes étapes du procédé de gestion d'une information de sécurité dans un réseau de communication, mis en œuvre par un équipement d'accès, selon un mode de réalisation de l'invention ;
**[****Fig. 3****]** Cette figure représente sous forme de logigramme les différentes étapes du procédé de gestion d'une connexion sécurisée à un réseau de communication, mis en œuvre par un équipement terminal, selon un mode de réalisation de l'invention;
**[****Fig. 4A****]** Cette figure représente de façon schématique les messages échangés entre un équipement d'accès au réseau et un équipement terminal suite au renouvellement de l'information de sécurité selon un premier exemple de réalisation de l'invention;
**[****Fig. 4B****]** Cette figure représente de façon schématique les messages échangés entre un équipement d'accès au réseau et un équipement terminal suite au renouvellement de l'information de sécurité selon un premier deuxième exemple de réalisation de l'invention;
**[****Fig. 5****]** Cette figure représente de façon schématique la vérification de conditions de reconnexion d'un équipement terminal au réseau de communication suite au renouvellement de l'information de sécurité selon un mode de réalisation de l'invention ;
**[****Fig. 6****]** Cette figure représente de façon schématique un exemple de diagramme temporel des échanges entre des équipements terminaux enregistrés dans le réseau de communication et l'équipement d'accès audit réseau suite au renouvellement de l'information de sécurité selon un mode de réalisation de l'invention;
**[****Fig. 7****]** Cette figure propose un schéma synoptique d'un équipement d'accès à un réseau de communication comprenant un dispositif de gestion d'une information de sécurité dans un réseau de communication mettant en œuvre le procédé de gestion d'une information de sécurité de la figure **2** ; et
**[****Fig. 8****]** Cette figure propose un schéma synoptique d'un équipement terminal comprenant un dispositif de gestion d'une connexion à un réseau de communication, mettant en œuvre le procédé de gestion d'une connexion à un réseau de communication de la figure **3****.**

### Description détaillée de modes de réalisation de l'invention

Le principe général de l'invention repose sur un renouvellement régulier d'une information de sécurité partagée par un équipement d'accès au réseau et un équipement terminal enregistré dans le réseau, à l'initiative de l'équipement d'accès. L'invention offre en outre à tout équipement terminal connecté au réseau au moment du changement d'information de sécurité, la possibilité de se réauthentifier sans coupure de connexion au réseau pendant une période temporelle limitée où l'ancienne et la nouvelle informations de sécurité sont simultanément valides.

Dans la suite de la description, on s'attache à présenter en détails le cas d'un réseau de communication Wifi résidentiel auquel des équipements terminaux se connectent de façon sécurisée sur la base d'un échange d'informations de sécurité, telles que des clés de type pré-partagées ou PSK. Bien sûr, l'invention n'est pas limitée à cet exemple et concerne également tout autre type de réseau, auquel des équipements terminaux se connectent de façon sécurisée sur la base d'un échange d'informations de sécurité. Par exemple, le réseau RC est un réseau d'entreprise, mettant en œuvre une technologie Li-Fi ou d'un autre type. Les informations de sécurité peuvent être des mots de passe ou tout autre type de secret partagé.

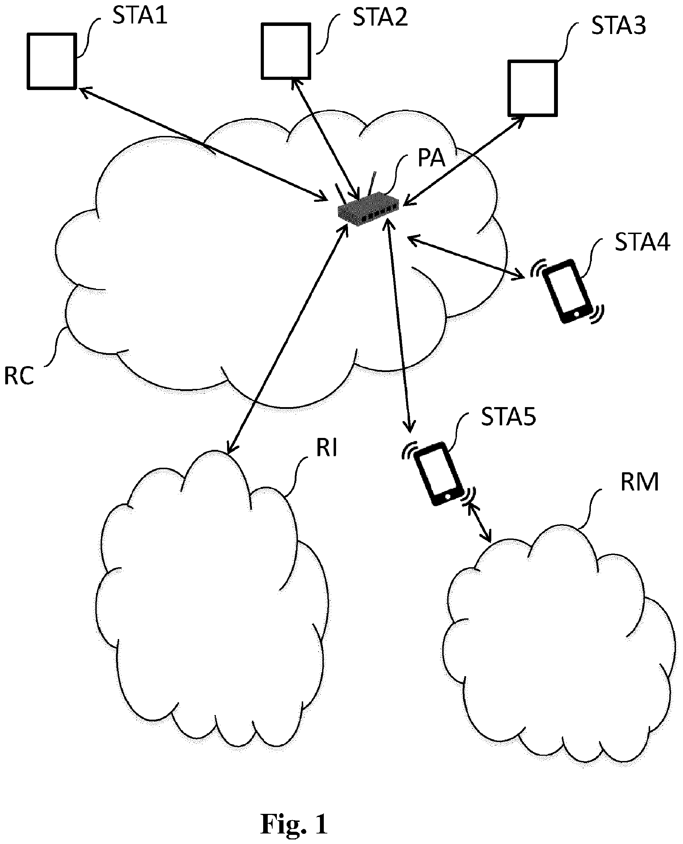

En relation avec la figure **1****,** on considère un réseau de communication local RC comprenant un équipement d'accès PA, de type passerelle résidentielle (pour « home gateway », en anglais). Bien sûr, l'invention n'est pas limitée à cet exemple et s'applique à tout autre type d'équipement d'accès à un réseau de communication sans fil, comme par exemple un équipement de type répéteur Wifi (pour « Wifi Range Extender », en anglais), qui permet de répéter un signal Wi-Fi plus loin, par exemple pour atteindre le fond d'un couloir dans un bâtiment.

Dans l'exemple de la figure **1****,** on considère plusieurs équipements terminaux ou stations STA aptes à se connecter au réseau de communication sans fil RC :
- Une tablette STA1,
- un terminal mobile STA2, qui dispose en outre d'une interface cellulaire ;
- un objet communicant STA1, par exemple, une caméra (pour « webcam », en anglais) ;
- un ordinateur portable STA3;
- un terminal mobile STA4, qui dispose en outre d'une interface cellulaire ; et
- un autre terminal mobile STA5, équipement habituel d'un utilisateur administrateur du réseau RC.

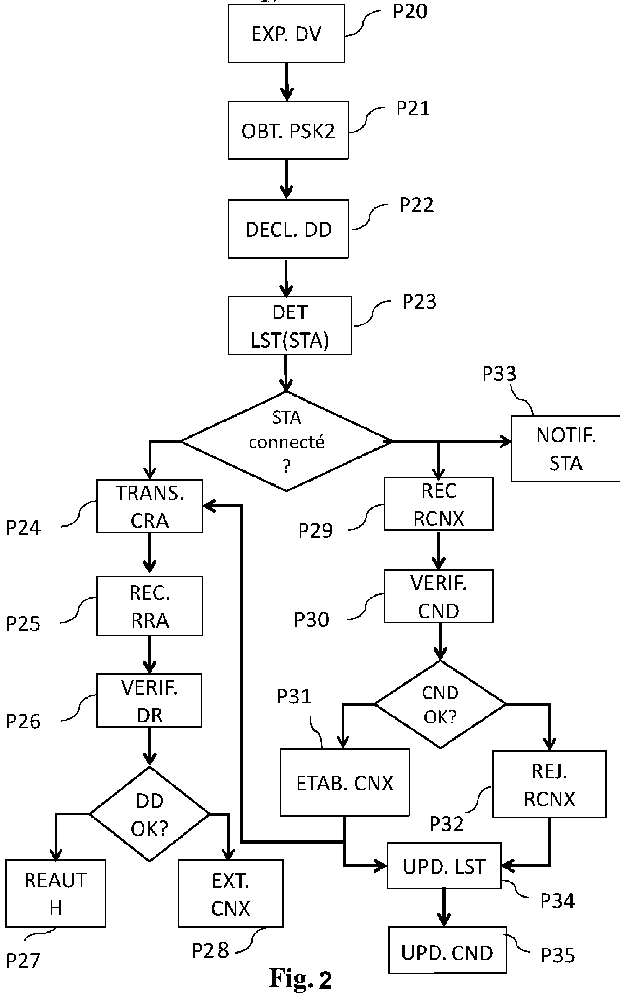

Dans la suite de la description, on considère que la passerelle domestique PA, 10 embarque un dispositif 100 de gestion d'une information de sécurité (non représenté sur la figure **1**) apte à mettre en œuvre un procédé de gestion d'une information de sécurité selon un mode de réalisation de l'invention, qui va maintenant être décrit en relation avec la figure **2****.**

De façon connue, le réseau Wifi RC est associé à un identifiant unique, appelé SSID (pour « Service Set Identifier », en anglais), tel que spécifié par la norme IEEE 802.11.

De façon connue, dans un réseau Wifi, l'équipement d'accès PA et un équipement terminal STA enregistré dans le réseau RC partagent un secret, généralement intelligible et de façon non numérique. Il s'agit, selon la norme IEEE 802.11, d'une clé de sécurité partagée PSK (pour « Pre-Shared Key », en anglais), qui est humainement lisible et comprend entre 8 et 63 caractères au format ASCII. On entend par moyen de partage non numérique le fait que les parties n'obtiennent pas la clé par un échange de messages via une communication numérique non sécurisée. Par exemple, la clé PSK est généralement choisie par le fabricant et inscrite à l'arrière de la passerelle résidentielle. L'utilisateur du terminal STA doit la saisir via une interface du terminal pour que ce dernier puisse établir une connexion avec l'équipement d'accès PA.

On notera toutefois qu'un terminal STA peut aussi se connecter au point d'accès PA en utilisant un protocole appelé WPS (pour « Wifi Protected Setup », en anglais), destiné à simplifier la phase de configuration de la sécurité d'un réseau sans fil que, selon ce protocole le point d'accès AP lui transmet au terminal STA la clé PSK de façon non sécurisée.

A partir de cette clé PSK l'équipement d'accès et l'équipement terminal STA génèrent chacun de leur côté une autre clé appelée PMK (pour « Pairwise Master Key », en anglais) à l'aide d'un algorithme spécifié par la norme IEEE 802.11. A partir de cette clé PMK, les équipements PA et STA échangent des messages et dérivent d'autres clés formant un jeu de clés de sécurité permettant d'établir une connexion sécurisée entre eux. De la sorte, la clé PSK n'est jamais échangée dans le réseau.

Dans la suite de la description, on désignera par JK, un jeu de clés issu de la clé PSK et on utilisera invariablement JK pour désigner une clé de ce jeu échangée dans un message entre l'équipement d'accès PA et un terminal STA.

Dans la suite de la description, on considère plus particulièrement le cas où la clé PSK1 n'est pas celle inscrite par le fabricant au dos du boîtier de la passerelle résidentielle PA, mais a été choisie par un utilisateur ou automatiquement par la passerelle PA et a été associée à une durée de validité DV1. Par exemple, cette durée de validité a été déterminée en fonction d'une robustesse de la clé PSK1, en utilisant par exemple la solution de l'art antérieur précédemment cité. Cette robustesse est évaluée en fonction d'une entropie de la clé ce qui permet d'estimer une « durée de vie moyenne avant cassage » de cette clé, laquelle est ensuite divisée par un facteur compris entre 50 et 100 pour plus de sûreté. Elle peut être comprise entre 1 jour et quelques mois.

A l'expiration de la durée de validité DV1 associée à cette première clé PSK1 et détectée en P20, une deuxième clé PSK2 est obtenue en P21 et un délai DD de désactivation de la première clé PSK2 et donc du premier jeu de clés JK1 est déclenché en P22.

Par exemple, le délai de désactivation est :
- fixé manuellement, par exemple égal à 24 heures ; ou
- préférentiellement, déterminé en fonction de la durée de validité DV1 de la première clé, et inférieur à la durée de validité. Par exemple, pour une durée de validité DV1 d'une semaine, un délai de désactivation de 24h semblerait cohérent.

De façon analogue, la deuxième clé PSK2 peut être obtenue de diverses façons :
- L'utilisateur administrateur du réseau la choisit lui-même et une durée de validité associée DV2 est calculée en utilisant par exemple la solution de l'art antérieur précédemment cité ;
- l'équipement d'accès PA la crée à partir d'un dictionnaire par exemple selon la technique décrite dans la demande de brevet français publié sous le numéro FR3028336, par l'INPI en mai 2016.

En P23, on détermine une liste d'équipements terminaux STA enregistrés au réseau de communication RC. Au moment du changement de clés, ces équipements terminaux peuvent être connectés ou non au réseau RC.

Dans la suite, on considère donc deux cas :
Selon un premier cas, un équipement terminal est connecté au réseau RC par l'intermédiaire de l'équipement d'accès PA, qui lui transmet en P24 un message de commande de réauthentification comprenant au moins la deuxième clé JK2 et un délai de réauthentification DR. Ce délai peut être paramétrable et choisi en fonction de l'équipement terminal STA, mais il expire au plus tard à la fin du délai de désactivation DD de la première clé. En P25, l'équipement d'accès PA reçoit le message de requête de réauthentification en provenance de l'équipement terminal.

En P26, il vérifie que le délai de réauthentification DR n'a pas expiré :
- Si le délai de réauthentification DR n'a pas expiré, il réauthentifie en P27 l'équipement terminal à l'aide de la deuxième clé JK2 sans extinction ou terminaison de la connexion ;
- Sinon, il met fin à la connexion en P28.

Selon un deuxième cas, un équipement terminal, non connecté à l'équipement d'accès PA au moment du changement de clés, demande à se connecter. L'équipement d'accès PA reçoit en P29 un message RCNX de requête d'établissement d'une connexion comprenant ladite première clé JK1 en provenance de ce terminal. En P30, il vérifie au moins une condition de reconnexion CND, comprenant au moins la non-expiration d'un délai de reconnexion DX prédéterminé. Ce délai DX n'expire généralement pas plus tôt que le délai de désactivation DD de la première clé.

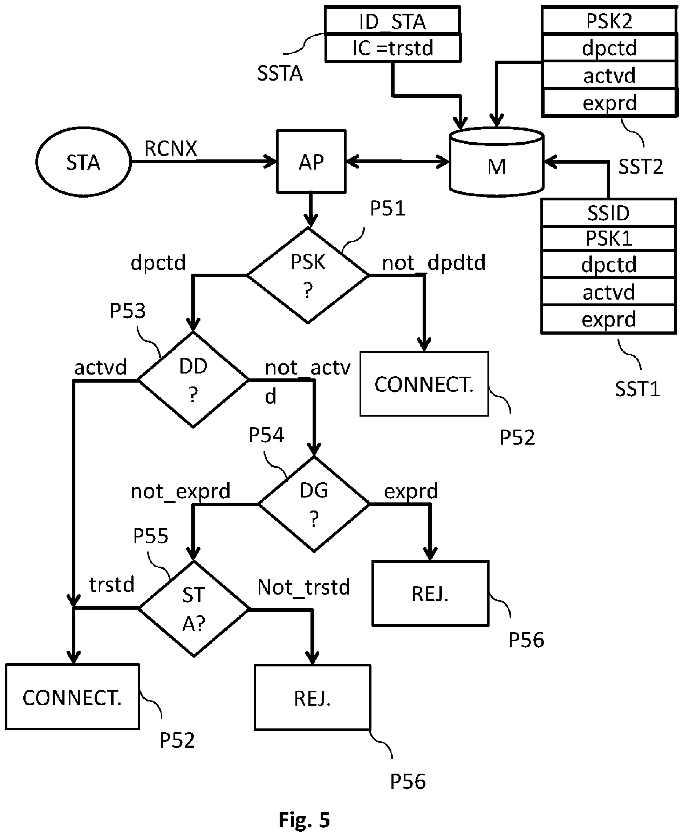

Si ladite au moins une condition de reconnexion est satisfaite :
- l'équipement PA établit en P31 la connexion de l'équipement terminal au réseau de communication sur la base de la première clé ;
- Il déclenche une procédure de réauthentification de l'équipement terminal en répétant les étapes P24 à P28 déjà décrites dans le premier cas. D'abord il lui transmet en P24 un message de requête de réauthentification comprenant au moins la deuxième clé et un délai de réauthentification DR. Ici, ce délai ne correspond pas nécessairement au délai de désactivation de la première clé PSK1 qui peut avoir déjà expiré. En revanche, il est choisi avec une durée raisonnable, généralement inférieure au délai DD;
- Sur réception en P25 d'une requête de réauthentification en provenance de l'équipement terminal, il vérifie en P26 la non expiration du délai DR, le cas échéant réauthentifie en P27 l'équipement terminal à l'aide de la deuxième clé sans extinction de connexion ;
- Sinon, à l'expiration du délai DR, il met en P28 fin à la connexion;
Sinon, si au moins une condition de reconnexion CND n'est pas satisfaite, il rejette en P32 la demande de connexion. Des exemples de conditions de reconnexion seront détaillés ci-après en relation avec la figure **5****.**

Optionnellement, en P33, l'équipement d'accès PA notifie les équipements terminaux STA de la liste LST qui ne sont pas connectés au réseau RC de l'événement de changement de clé et de la nécessité de se reconnecter dans un délai prédéterminé de reconnexion DX. Pour ce faire, l'équipement PA leur transmet un message de notification de changement de clé NCK via un autre réseau de communication auquel il accède par l'intermédiaire du réseau internet RI. Par exemple, il envoie un message de type SMS à un terminal mobile apte à se connecter à un réseau mobile RM. On notera que de façon alternative, l'équipement PA, lorsqu'il est équipé d'un écran, peut aussi commander l'affichage d'une notification sur cet écran ou bien sur un autre écran de la maison, connecté au réseau RC. De la sorte, les utilisateurs d'équipements terminaux présents dans la maison peuvent prendre connaissance de la nouvelle clé PSK2 ou au moins de la nécessité de se reconnecter rapidement.

En P34, l'équipement d'accès met à jour la liste LST en retirant l'identifiant de l'équipement terminal STA qui s'est reconnecté. Optionnellement, en P35, il vérifie peu avant l'expiration du délai DX si la liste LST, et sinon, il peut prolonger le délai DX en lui ajoutant un délai de grâce supplémentaire de façon à donner une opportunité supplémentaire aux équipements terminaux qui ne l'ont pas encore fait de se reconnecter. Avantageusement, il vérifie le statut des équipements terminaux de la liste LST et ne prolonge le délai DX que pour ceux qui sont dignes de confiance.

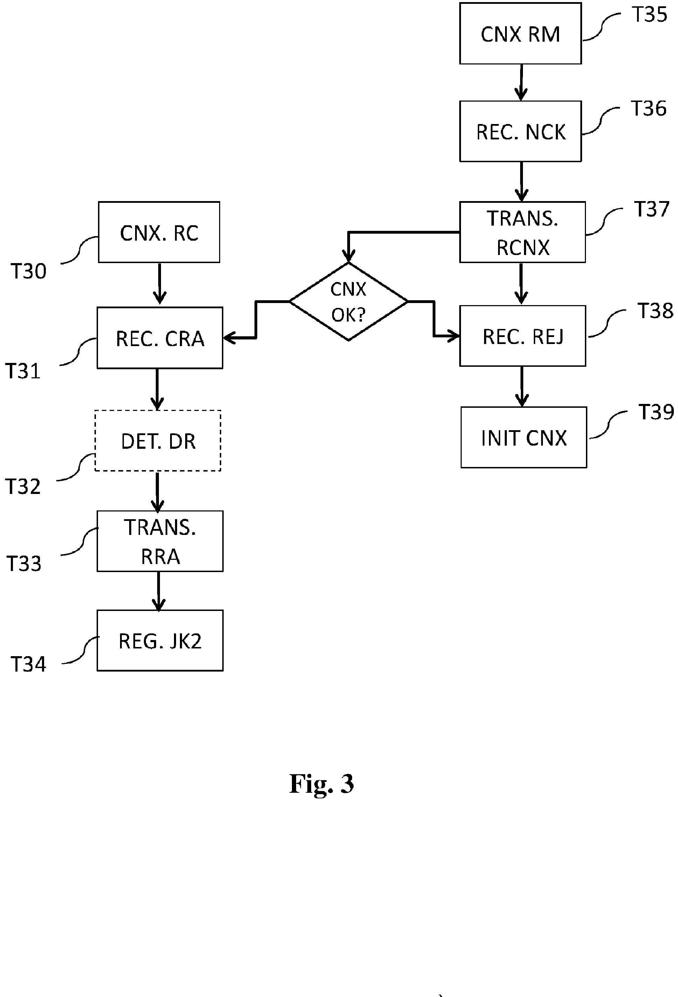

En relation avec la figure **3****,** on décrit maintenant un procédé de gestion d'une connexion d'un équipement terminal STA au réseau de communication RC selon un mode de réalisation de l'invention. Ce procédé est destiné à être mis en œuvre par un dispositif connecté à ou embarqué dans l'équipement terminal STA.

Selon un premier cas, on suppose que l'équipement terminal STA a préalablement établi une connexion avec le réseau RC en T30 et que cette connexion est en cours lors du changement de clé à un instant t0.

En T31, il reçoit via cette connexion un message de commande de réauthentification CRA en provenance de l'équipement d'accès PA. Ce message comprend la deuxième clé PSK2 et un délai de réauthentification DR.

Optionnellement, l'équipement STA met en œuvre en T32 une détermination aléatoire d'un instant de réauthentification t_{RA} compris dans le délai DR. Il émet en T33 une requête de réauthentification à destination de l'équipement PA à l'instant t_{RA} déterminé, le cas échéant, sinon à l'expiration du délai DR.

En T34, une fois réauthentifié, le terminal STA enregistre le nouveau jeu de clé JK2 issu de la deuxième clé PSK2.

Selon un deuxième cas, l'équipement terminal STA n'est pas connecté au réseau RC, par exemple parce qu'il est hors de portée de ce réseau ou bien parce qu'il a désactivé son module d'émission/réception Wifi. En revanche, on suppose qu'il s'est connecté en T35 à un autre réseau de communication, par exemple le réseau mobile RM, auquel l'équipement d'accès PA peut lui aussi accéder via le réseau internet RI. Il reçoit en T36 un message NCK de notification de changement de clé en provenance de l'équipement d'accès PA comprenant un délai de reconnexion DX. En T37, lorsqu'il est de nouveau à portée du réseau RC, il envoie une requête de connexion RCNX à l'équipement PA.

A ce stade, deux cas sont envisagés :
- soit le délai DX est expiré et l'équipement d'accès PA rejette la requête de connexion RCNX. Le terminal STA reçoit un message de rejet en T38 ;
- soit le délai DX court et l'équipement d'accès établit la connexion en P31. Le terminal STA reçoit ensuite, via cette connexion, un message de commande de réauthentification, ce qui correspond à l'étape T31 déjà décrite. Elle est suivie des étapes T32 à T34 déjà décrites.

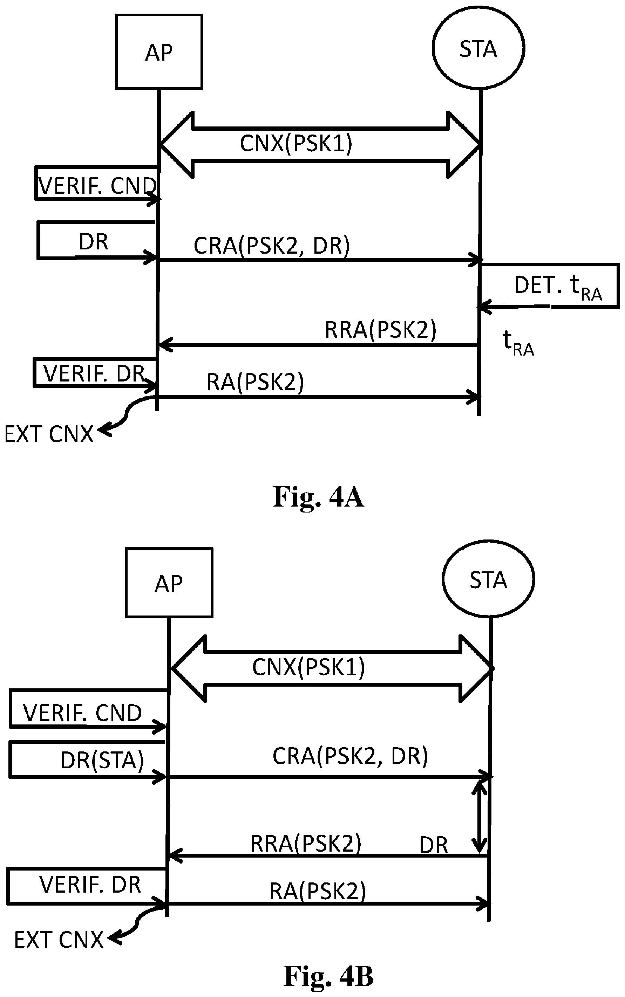

En relation avec les figures **4A** et **4B****,** on détaille maintenant la réauthentification d'un équipement terminal déjà enregistré au réseau de communication RC, correspondant aux étapes P24-P28 et T31-34. On se place indifféremment dans l'un des deux cas précédemment décrits, où l'équipement terminal STA est connecté au réseau RC au moment du changement de clé ou bien demande à se connecter peu après ce changement, dans les conditions de reconnexion CND. Dans les deux cas, la connexion a été établie sur la base de la première clé PSK1 et donc du jeu de clés JK1 dérivé de PSK1. L'équipement d'accès PA transmet en P23 un message de commande de réauthentification CRA comprenant la deuxième clé PSK2 et un délai de réauthentification DR.

Selon un premier mode de réalisation illustré par la Figure **4A****,** ce délai correspond à une période temporelle pendant laquelle l'équipement terminal STA peut choisir l'instant t_{RA} où il demande à se réauthentifier. Avantageusement, l'équipement terminal STA détermine aléatoirement en T32 cet instant dans le délai DR indiqué. Ceci permet à l'équipement d'accès PA de transmettre simultanément une commande de réauthentification CRA à plusieurs équipements terminaux STA comprenant le même délai DR, avec une garantie que les requêtes de réauthentification qu'il aura à traiter en retour lui parviendront à des instants distincts répartis sur la période DR.

Selon un deuxième mode de réalisation illustré par la Figure **4B****,** le délai DR indiqué par l'équipement d'accès au terminal STA est un délai impératif qu'il a spécifiquement choisi pour ce terminal STA, dans le même but d'éviter d'avoir à gérer un pic de requêtes de réauthentification.

On considère maintenant, selon un mode de réalisation de l'invention, le deuxième cas, d'un équipement terminal STA, enregistré au réseau RC, mais non connecté au moment du changement de clé. Il dispose donc d'informations de connexion comprenant la première clé PSK1 en cours de désactivation. On détaille en relation avec la figure **5** l'étape P29 de vérification de conditions de reconnexion CND de l'équipement terminal STA par l'équipement d'accès PA.

On suppose que l'équipement d'accès PA reçoit une requête de connexion en provenance d'un équipement STA sur la base de la première clé PSK1.

On suppose que, selon l'invention, l'équipement PA stocke une nouvelle structure de données SST1 comprenant des informations de statut de la première information de sécurité, par exemple le premier jeu de clés JK1 issu de la clé PSK1, destinée à être utilisée pour connecter des équipements terminaux aux réseau RC identifié par son SSID. Par exemple, cette structure de données comprend trois champs d'information distincts relatifs à trois états ou statuts distincts que peut prendre la clé de sécurité :
- un champ relatif à un paramètre d'obsolescence de la clé. L'équipement d'accès PA positionne ce champ d'information ou paramètre à la valeur « *dprtd* » par exemple égale à 1 pour la première clé dès qu'il obtient une deuxième clé PSK2 et déclenche le changement de clé;
- un champ relatif à un paramètre d'activité de la clé. L'équipement d'accès PA le positionne à « *not_actvd* », par exemple égal à 0 à l'expiration du délai de désactivation DD ;
- un champ relatif à un délai de grâce DG. L'équipement PA le positionne à 1 le positionne à 1 une fois le délai de désactivation expiré.

On comprend que l'équipement d'accès PA au réseau RC gère une structure de données SST par clé, donc au moins une structure de données SST1 pour la première clé et une structure de données SST2 pour la deuxième clé.

La structure de données SST2 est initialisée comme suit :
- le champ relatif à un paramètre d'obsolescence de la clé est positionné à la valeur « *non_dprtd* » par exemple égale à 0
- le champ relatif à une activité de la clé est positionné à « *actvd* », par exemple égal à 1 ;
- un champ relatif à un délai de grâce. L'équipement PA le positionne à une valeur « *unused* », par exemple égal à 2 tant qu'il n'est pas pertinent. Il sera utilisé, conformément à l'invention, quand un renouvellement du deuxième jeu de clé JK2 issu de PSK2 aura été décidé.

On notera que la norme IEEE 802.11 ne prévoit pas dans sa spécification actuelle la possibilité d'associer plusieurs informations de sécurité, par exemple de type PSK, à un même identifiant de réseau SSID. Au contraire, l'invention propose d'introduire pour une période temporelle limitée un deuxième jeu de clés JK2 issu d'une deuxième clé PSK2, ainsi que des attributs permettant de décrire le statut courant de chacun de ces jeux de clés. Ces attributs sont stockés par exemple dans les structures de données SST1, SST2 qui viennent d'être décrites.

Les champs attributs de ces structures de données renseignent donc sur les statuts des deux jeux de clés JK1 et JK2. Ces structures de données sont particulièrement utiles pendant la période de cohabitation des deux jeux de clés. Par exemple, quand le premier jeu de clés a définitivement expiré, par exemple à l'issue du délai de grâce DG (ou du dernier délai de grâce supplémentaire DGS), la structure SST1 est effacée de la mémoire de l'équipement d'accès PA. Une nouvelle structure SST3 sera créée lors du renouvellement du deuxième jeu de clés, à l'issue de sa période de validité DV2. De façon alternative, seules les valeurs des attributs peuvent être effacées et la même structure SST1 est utilisée pour le jeu de clés JK3.

Sur réception de la requête de connexion basée sur la première clé PSK1 en provenance de l'équipement terminal STA, l'équipement d'accès PA vérifie en P51 le statut de cette première clé PSK1 en consultant la structure de données SST1 stockée en mémoire. En particulier, il teste la valeur du paramètre d'obsolescence. S'il est positionné à la valeur «*not_dpctd* », par exemple égale à 0, qui signifie que la première clé n'est pas obsolète, alors il déclenche l'étape P52 qui correspond à l'établissement de la connexion de l'équipement terminal STA, suivi d'une réauthentification sans extinction de connexion, comme précédemment décrit en relation avec les figures **2*****,*** **4A** et **4B****.** Si au contraire il est positionné à la valeur « *dpctd* », par exemple égale à 1, il déclenche l'étape P53. L'étape P53 teste le deuxième paramètre de la structure de données SST1, lié à l'expiration d'un délai de désactivation de la première clé. Pour rappel, ce délai est déclenché par l'équipement d'accès PA lors du changement de clé. Si ce paramètre est positionné à la valeur « *not_octvd* », par exemple égale à 0, ce qui signifie que la première clé est désactivée, parce que le délai DD a expiré, alors l'équipement d'accès déclenche l'étape P54. Si au contraire il est positionné à la valeur « *actvd* », par exemple égale à 1, alors l'équipement d'accès PA déclenche l'étape P52 d'établissement de la connexion de l'équipement terminal STA.

L'étape P54 teste le troisième paramètre de la structure SST1 relatif à l'expiration d'un délai de grâce DG déclenché à l'expiration du délai de désactivation DD. Ce délai de grâce vient donc prolonger le délai DX, c'est-à-dire la période pendant laquelle un équipement terminal peut se reconnecter avec la première clé. Si ce paramètre est positionné à la valeur « *exprd*», par exemple égale à 1, ce qui signifie que le délai de grâce DG a expiré, alors l'équipement d'accès déclenche l'étape P56 de rejet de la requête de connexion. Cela signifie que pour se reconnecter, l'équipement terminal devra effectuer une procédure de connexion initiale au réseau, comme s'il n'était pas déjà enregistré. Si au contraire il est positionné à la valeur « *not_exprd* », par exemple égale à 0, alors l'équipement d'accès PA déclenche une étape suivante qui peut être l'étape P52 d'établissement d'une connexion avec le terminal STA.

Optionnellement, l'équipement PA déclenche d'abord une étape P55 de test d'un statut de l'équipement terminal STA. Avantageusement, ce statut est stocké en mémoire par l'équipement d'accès PA dans une structure de données SSTA comprenant un enregistrement associant à un identifiant unique ID_STA de l'équipement terminal STA un paramètre IC représentatif d'un niveau de confiance attribué au terminal STA. Par exemple, cet identifiant unique peut être l'adresse MAC de l'équipement terminal.

On notera qu'un identifiant plus sécurisé peut aussi être obtenu en échangeant entre l'équipement d'accès et le terminal une donnée « authentifiant » le terminal, et donc virtuellement « signée » par le terminal, qui peut être :
- Soit une donnée aléatoirement générée à la première connexion et mémorisée par les deux équipements ;
- Soit une donnée réellement signée grâce à de la cryptographie asymétrique.

Ce paramètre de confiance IC peut prendre une première valeur « *trstd* », égale à 1, qui signifie que l'équipement terminal STA est digne de confiance ou une deuxième valeur « *not_trstd* », égale à 0, qui signifie au contraire que le terminal STA n'est pas digne de confiance. Ces valeurs peuvent être attribués à l'équipement terminal STA lors de sa première connexion par un utilisateur jouant un rôle d'administrateur du réseau de communication RC. Par exemple, l'administrateur affectera la valeur « *trstd* » aux équipements terminaux de la maison, comme les objets connectés habituellement installés dans les pièces de la maison et aux terminaux utilisateurs des résidents de la maison et il affectera la valeur « *not_trstd* » à un équipement terminal visiteur.

En P55, si le paramètre représentatif d'un niveau de confiance de l'équipement terminal STA est positionné à « *trstd* », l'équipement PA déclenche l'étape P52 d'établissement d'une connexion au réseau. Sinon, il rejette la requête de connexion en P56.

Ainsi, selon l'invention, l'équipement d'accès PA filtre les requêtes de connexion pendant une période de transition qui voit les deux jeux de clés de sécurité JK1 et JK2 cohabiter. L'équipement d'accès contrôle la durée de cette période de transition, qui doit rester la plus courte possible, afin de ne pas rendre la gestion du réseau trop complexe. Comme évoqué précédemment, elle est au minimum égale au délai DD de désactivation de la première clé PSK1. Elle peut être prolongée de la durée d'un délai de grâce de sorte à faciliter la reconnexion d'équipements terminaux déjà enregistrés dans le réseau, mais non connectés au moment du déclenchement du changement de clé.

Selon un mode de réalisation, à l'issue de ce délai de grâce DG, l'équipement d'accès vérifie que tous les équipements terminaux STA dignes de confiance se sont bien reconnectés puis réauthentifiés.

Il peut décider de prolonger le délai de grâce d'un délai de grâce supplémentaire DGS qui peut être choisi inférieur ou égal à DG, pour laisser une dernière opportunité aux terminaux « dignes de confiance » de se reconnecter facilement au réseau RC.

On notera que selon l'invention et dans le cas d'un réseau Wifi, les messages de gestion de trames (pour « frame management », en anglais), échangés entre l'équipement d'accès PA et un équipement terminal STA, sont tels que spécifiés par la norme IEEE 802.11 section 9.3.3.12, mais que l'invention propose d'en spécifier un supplémentaire, le message de commande de réauthentification CRA, pour inviter l'équipement terminal STA à se réauthentifier, à l'initiative de l'équipement d'accès PA.

Par exemple, selon l'invention, ce message de commande de réauthentification CRA comprend les champs d'information suivants :
- une information représentative d'une cause de réauthentification (« reason code », en anglais), positionnée à une valeur indicative d'une mise à jour de l'information de sécurité, par exemple de la clé PSK (« update-PSK », en anglais) ;
- la nouvelle information de sécurité, par exemple la nouvelle clé PSK (« data », en anglais) ; et
- un délai DR de réauthentification, à l'issue duquel une requête de réauthentification sera rejetée (« max_delay », en anglais).

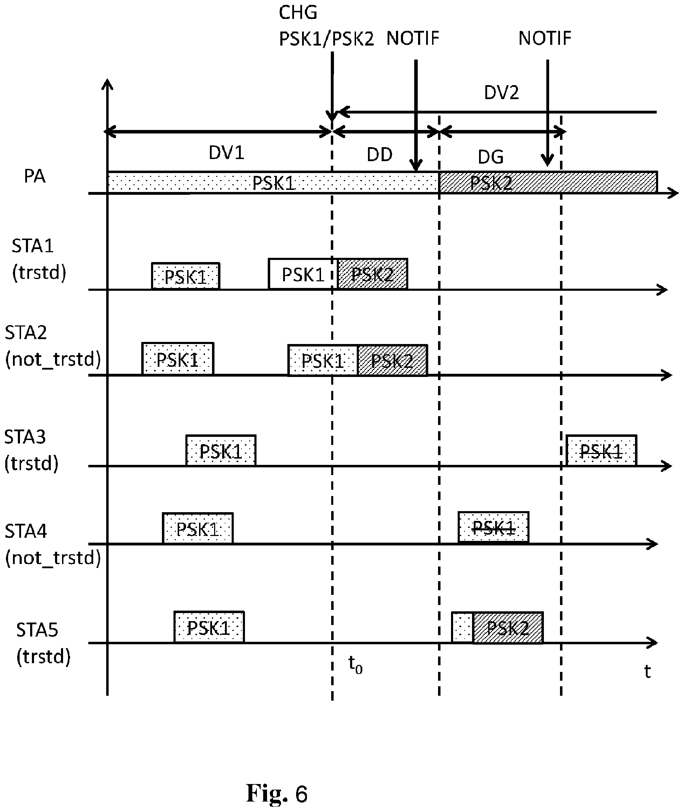

On présente maintenant, en relation avec la figure **6****,** un diagramme temporel des échanges entre les équipements terminaux STA1-STA4 et l'équipement d'accès PA de la figure **1** avant, pendant et après un changement de clés de sécurité selon un mode de réalisation de l'invention.

On suppose que la durée de validité DV1 associée à la clé PSK1 expire à t₀. L'équipement d'accès PA obtient une nouvelle clé PSK2 et déclenche un changement de clé ainsi qu'un délai de désactivation DD de la première clé PSK1.

On considère l'objet communicant STA1 qui est connecté au réseau RC au moment du changement de clé à t0. L'équipement d'accès PA lui envoie une commande de réauthentification CRA comprenant la nouvelle clé JK2 dérivée de PSK2 et un délai de réauthentification DR. On suppose que STA1 demande à se réauthentifier dans le délai DR imparti. Il obtient ainsi le nouveau jeu de clé JK2 sans perte de connexion.

On considère maintenant l'ordinateur portable STA2, qui est enregistré au réseau RC, mais n'est pas connecté au moment du changement de clé. On suppose qu'il ne demande pas à se reconnecter dans le délai de désactivation DD, mais que selon cet exemple de réalisation de l'invention, l'équipement PA prolonge le délai DD par un délai de grâce DG au cours duquel l'équipement STA2 demande à se connecter sur la base de la première clé JK1, maintenant désactivée. Dans cet exemple l'équipement PA maintient une structure de données SSTA qui, comme décrit précédemment, associe à un équipement terminal enregistré dans le réseau un information relative à un niveau de confiance qui lui est accordé. On suppose que STA2 est considéré comme « digne de confiance » (IC = « trstd » par exemple égal à 1). L'équipement PA ne rejette donc pas sa demande de connexion, mais lui demande de se reconnecter selon l'étape 42 qui correspond à l'établissement de la connexion de l'équipement terminal STA, suivi d'une réauthentification sans extinction de connexion, comme précédemment décrit en relation avec les figures **2****, 3A-B.**

En ce qui concerne l'équipement terminal STA3, il n'était pas connecté au moment du changement de clé et demande à se reconnecter sur la base de l'ancien jeu de clés JK1 après expiration du délai de grâce DG. Bien qu'il bénéficie du statut « digne de confiance », l'équipement d'accès rejette sa requête de connexion, ce qui signifie qu'il doit se réenregistrer au réseau, comme un nouvel équipement.

Le terminal mobile STA4 n'était pas connecté lors du changement de clés. Il demande à se reconnecter pendant le délai de grâce DG, mais comme il n'est pas associé au statut « digne de confiance », sa requête est rejetée par l'équipement d'accès PA.

En ce qui concerne enfin l'équipement terminal STA5, il est non seulement « digne de confiance », mais aussi le terminal mobile de l'utilisateur administrateur du réseau RC. Avantageusement, l'équipement d'accès PA notifie l'administrateur du changement de clés, par exemple en lui transmettant un message de notification de type SMS (pour « Short Message System », en anglais) via un réseau mobile RM ou par l'intermédiaire d'une application de gestion du réseau RC installée sur le terminal STA5. Un premier message de notification est par exemple transmis à bref délai après t0 et si à l'expiration du délai de désactivation DD de la première clé PSK1 le terminal STA5 ne s'est toujours pas reconnecté, l'équipement d'accès PA peut lui adresser un deuxième message avant l'expiration du délai de grâce DG. En outre, comme précédemment évoqué, l'équipement PA peut aussi décider de prolonger le délai de grâce d'un délai supplémentaire DGS s'il reste des équipements terminaux dignes de confiance qui ne se sont pas encore reconnectés au réseau RC.

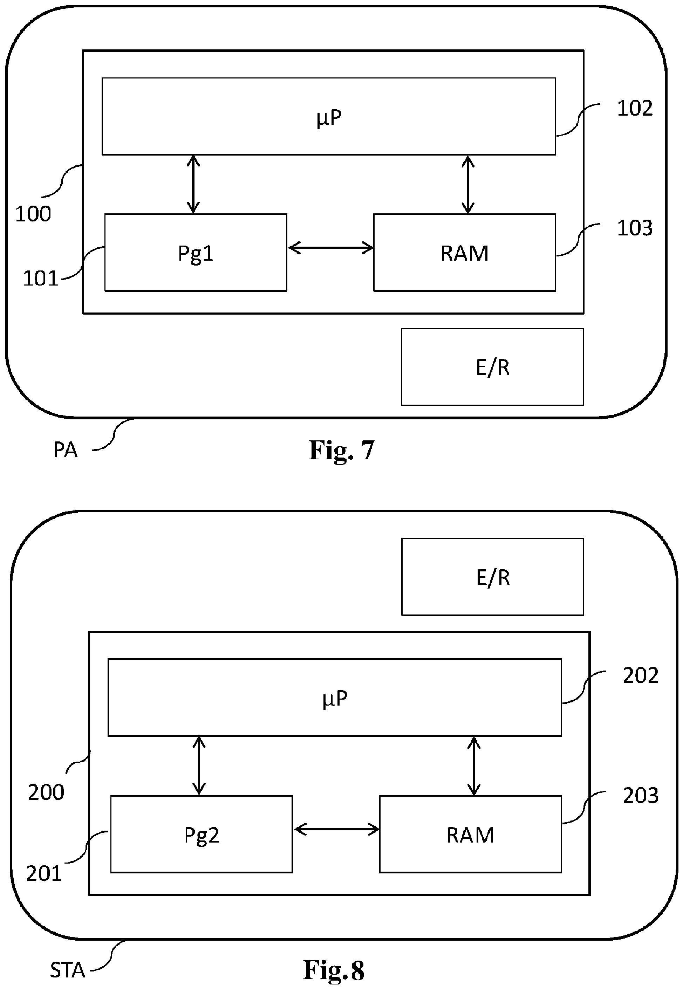

On présente maintenant, en relation avec la figure **7****,** la structure matérielle d'un dispositif 100 de gestion d'une information de sécurité information de sécurité dite première information de sécurité, destinée à être mise en œuvre pour établir une connexion sécurisée entre au moins un équipement terminal et un équipement d'accès PA à un réseau de communication, ladite première information de sécurité étant associée à une première durée de validité DV.

Le dispositif 100 comprend en outre un module d'obtention d'une deuxième information de sécurité, apte à être mis en œuvre à l'expiration de la durée de validité DV et un module de déclenchement d'un délai de désactivation de la première information de sécurité, un module de transmission à un équipement terminal connecté à l'équipement d'accès d'un message de requête de réauthentification comprenant au moins la deuxième information de sécurité et ledit délai de désactivation de la première information de sécurité et un module d'extinction de la connexion à l'expiration du délai de désactivation. Avantageusement, il comprend aussi un module de vérification d'au moins une condition de reconnexion, un module de détermination d'une liste d'au moins un équipement terminal enregistré dans le réseau avec le statut « digne de confiance » préalablement au déclenchement du délai de désactivation de la première information de sécurité, et n'ayant pas encore émis de requête de connexion et un module d'émission d'un message de notification à destination dudit au moins un équipement terminal avant l'expiration d'un délai de grâce, conformément aux modes de réalisation décrits en relation avec les figures **2****,** **4A****,** **4B****,** **5** et **6****.**

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif de gestion 100 comprend une mémoire vive 103 (par exemple une mémoire RAM), une unité de traitement 102 équipée par exemple d'un processeur, et pilotée par un programme d'ordinateur Pg1, représentatif du module d'obtention d'une deuxième information de sécurité, du module de déclenchement d'un délai de désactivation de la première information de sécurité, du module de transmission d'un message de réauthentification et du module d'extinction de la connexion, stocké dans une mémoire morte 101 (par exemple une mémoire ROM ou un disque dur). A l'initialisation, les instructions de code du programme d'ordinateur sont par exemple chargées dans la mémoire vive 103 avant d'être exécutées par le processeur de l'unité de traitement 102. La mémoire vive 103 contient notamment les valeurs de la première et de la deuxième information de sécurité, les durées de validité associées et le délai de désactivation de la première information de sécurité. Avantageusement, elle comprend les structures de données SST1 et SST2 renseignant sur le statut de chaque information de sécurité, les structures de données SSTA associant un identifiant d'un équipement terminal STA à un paramètre représentatif d'un niveau de confiance IC et une liste LST des équipements terminaux STA dignes de confiance qui ne se sont pas encore reconnectés au réseau RC suite au renouvellement de la première information de sécurité.

Le processeur de l'unité de traitement 102 pilote l'obtention de la deuxième information de sécurité, le déclenchement du délai de désactivation de la première information de sécurité, la transmission d'un message de commande de réauthentification et l'extinction de la connexion, conformément au logigramme de la figure **2****.**

La figure **7** illustre seulement une manière particulière, parmi plusieurs possibles, de réaliser le dispositif de gestion 100, afin qu'il effectue les étapes du procédé de gestion d'une information de sécurité que détaillé ci-dessus, en relation avec la figure **2** dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 100 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif de gestion 100 intégré à une passerelle résidentielle mais il peut plus généralement être embarqué dans n'importe quel équipement d'accès PA à un réseau de communication local.

On présente enfin, en relation avec la figure **8****,** la structure matérielle d'un équipement dispositif 200 de gestion d'une connexion d'un équipement terminal à un réseau de communication, comprenant un équipement d'accès audit réseau, ladite connexion étant sécurisée par une première information de sécurité.

Le dispositif 200 comprend un module de réception en provenance dudit équipement d'accès via une connexion au réseau de communication d'un message de commande de réauthentification, comprenant au moins une deuxième information de sécurité et un délai de réauthentification, apte à être mis en œuvre lorsque l'équipement terminal est connecté audit réseau, un module d'émission, dans le délai de réauthentification, d'un message de requête de réauthentification audit équipement d'accès comprenant la deuxième information de sécurité, et un module d'enregistrement dans une mémoire de la deuxième information de sécurité à la place de la première information de sécurité. Avantageusement, il comprend aussi un module de réception d'un message de notification de changement d'information de sécurité par l'intermédiaire d'une interface avec un autre réseau de communication, ledit message comprenant un délai de reconnexion audit réseau, un module d'émission d'un message de requête de reconnexion au réseau de communication (RC) dans ledit délai et un module détermination aléatoire d'un instant d'émission dudit message de requête de réauthentification audit équipement d'accès dans le délai de réauthentification conformément aux différents modes de réalisation décrits en relation avec les figures **3****,** **4A****,** **4B** et **6****.**

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 200 comprend une mémoire vive 203 (par exemple une mémoire RAM), une unité de traitement 202 équipée par exemple d'un processeur, et pilotée par un programme d'ordinateur Pg2, représentatif du module de réception, du module d'émission et du module d'enregistrement, stocké dans une mémoire morte 201 (par exemple une mémoire ROM ou un disque dur). A l'initialisation, les instructions de code du programme d'ordinateur sont par exemple chargées dans la mémoire vive 203 avant d'être exécutées par le processeur de l'unité de traitement 202. La mémoire vive 203 contient notamment la première et la deuxième informations de sécurité et le délai de réauthentification. Le processeur de l'unité de traitement 202 pilote la réception du message de commande de réauthentification, l'émission d'un message de requête de réauthentification et l'enregistrement en mémoire de la deuxième information de sécurité à la place de la première, conformément au logigramme de la figure **3****.**

La figure **8** illustre seulement une manière particulière, parmi plusieurs possibles, de réaliser le dispositif de gestion 200, afin qu'il effectue les étapes du procédé de gestion d'une connexion détaillé ci-dessus, en relation avec la figure **3****.** En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'équipement d'accès est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif de gestion 200 intégré à un équipement terminal STA, mais il peut aussi être indépendant de cet équipement terminal et connecté à lui.

## Revendications

1. Procédé de gestion d'une information de sécurité, dite première information de sécurité (PSK1, JK1), destinée à être mise en œuvre pour établir une connexion sécurisée entre au moins un équipement terminal (STA) et un équipement d'accès (PA) à un réseau de communication (RC), ladite première information de sécurité (PSK1, JK1) étant associée à une durée de validité (DV1), **caractérisé en ce que** ledit procédé est mis en œuvre par ledit équipement d'accès et **en ce qu'**il comprend :
- A l'expiration de la durée de validité (DV1), l'obtention (P21) d'une deuxième information de sécurité (PSK2, JK2) et le déclenchement (P22) d'un délai de désactivation (DD) de la première information de sécurité (PSK1, JK1);
- Si undit équipement terminal est connecté à l'équipement d'accès, la transmission (P24) audit équipement terminal d'un message de commande de réauthentification (CRA) comprenant au moins la deuxième information de sécurité et un délai de réauthentification (DR), ledit délai de réauthentification expirant au plus tard à la fin dudit délai de désactivation de la première information de sécurité; et
- Si un message de requête de réauthentification (RRA) est reçu (P25) en provenance de l'équipement terminal avant l'expiration du délai de réauthentification, réauthentification (P27) de l'équipement terminal à l'aide de la deuxième information de sécurité sans extinction de la connexion.

2. Procédé de gestion d'une information de sécurité selon la revendication **1, caractérisé en ce que**, suite au déclenchement du délai de désactivation (DD), sur réception d'un message (RCNX) de requête d'établissement d'une connexion d'un équipement terminal (STA) comprenant ladite première information de sécurité (PSK1, JK1), le procédé comprend une vérification (P26) d'au moins une condition de reconnexion (CND), ladite au moins condition comprenant au moins la non-expiration d'un délai de reconnexion prédéterminé (DX), ledit délai de reconnexion expirant au plus tôt à la fin du délai de désactivation de la première information de sécurité, et si ladite au moins une condition de reconnexion est satisfaite :
- l'établissement (P31) de la connexion de l'équipement terminal sur la base de la première information de sécurité (PSK1, JK1) ;
- la transmission (P24) audit équipement terminal d'un message de requête de réauthentification (CRA) comprenant au moins la deuxième information de sécurité (PSK2, JK2) et un délai de réauthentification (DR); et
- l'extinction (P28) de la connexion à l'expiration du délai de réauthentification.

3. Procédé de gestion d'une information de sécurité selon la revendication **2, caractérisé en ce que** le délai de reconnexion (DX) expire à la fin du délai de désactivation (DD) de la première information de sécurité (PSK1, JK1).

4. Procédé de gestion d'une information de sécurité selon la revendication **2, caractérisé en ce que** le délai de reconnexion (DX) expire à la fin d'un délai de grâce (DG) déclenché à l'expiration du délai de désactivation (DD) de la première information de sécurité.

5. Procédé de gestion d'une information de sécurité selon la revendication **4, caractérisé en ce que**, ledit équipement terminal (STA) ayant été préalablement enregistré dans le réseau (RC) en association avec une information de confiance (IC), ladite étape de vérification d'au moins une condition de reconnexion (CND) vérifie en outre que l'information de confiance est positionnée à une valeur «digne de confiance ».

6. Procédé de gestion d'une information de sécurité selon la revendication **5, caractérisé en ce qu'**il comprend la détermination (P23) d'une liste (LST) d'au moins un équipement terminal enregistré dans le réseau avec l'information de confiance positionnée à la valeur « digne de confiance » préalablement au déclenchement du délai de désactivation de la première information de sécurité, et n'ayant pas encore émis de requête de connexion, et l'émission (P33) d'un message de notification à destination dudit au moins un équipement terminal avant l'expiration du délai de grâce.

7. Procédé de gestion d'une information de sécurité selon la revendication **6, caractérisé en ce que**, à l'expiration du délai de grâce, un délai de grâce supplémentaire (DGS) est déclenché tant que la liste (LST) n'est pas vide.

8. Dispositif (100) de gestion d'une information de sécurité, dite première information de sécurité (JK1), destinée à être mise en œuvre pour établir une connexion sécurisée entre au moins un équipement terminal (STA) et un équipement d'accès (PA) à un réseau de communication (RC), ladite première information de sécurité étant associée à une première durée de validité (DV), **caractérisé en ce qu'**il est configuré pour :
- A l'expiration de la première durée de validité, obtenir une deuxième information de sécurité (JK2) et déclencher un délai de désactivation (DD) de la première information de sécurité;
- Si undit équipement terminal (STA) est connecté à l'équipement d'accès, transmettre audit équipement terminal un message (CRA) de requête de réauthentification comprenant au moins la deuxième information de sécurité (PSK2, JK2) et un délai de réauthentification (DR), ledit délai de réauthentification expirant au plus tard à la fin dudit délai de désactivation (DD) de la première information de sécurité; et
- Si un message de requête de réauthentification (RRA) est reçu en provenance de l'équipement terminal avant l'expiration du délai de réauthentification, réauthentification (P27) de l'équipement terminal à l'aide de la deuxième information de sécurité sans extinction de la connexion.

9. Equipement d'accès (PA) à un réseau de communication (RC), **caractérisé en ce qu'**il comprend un dispositif (100) de gestion d'une information de sécurité selon la revendication **8.**

10. Procédé de gestion d'une connexion d'un équipement terminal (STA) à un réseau de communication (RC), comprenant un équipement d'accès (PA) audit réseau, ladite connexion étant sécurisée par une première information de sécurité (PSK1, JK1), ledit procédé étant mis en œuvre par ledit équipement terminal et comprenant:
- Lorsqu'il est connecté audit réseau, réception (T31) en provenance dudit équipement d'accès via une connexion au réseau de communication d'un message (CRA) de commande de réauthentification, comprenant au moins une deuxième information de sécurité (PSK2, JK2) et un délai de réauthentification (DR) inférieur ou égal à un délai de désactivation (DD) de la première information de sécurité, et
- Emission (T33), dans le délai de réauthentification (DR), d'un message (RRA) de requête de réauthentification audit équipement d'accès comprenant la deuxième information de sécurité (JK2), et enregistrement (T34) de la deuxième information de sécurité (PSK2, JK2) à la place de la première information de sécurité.

11. Procédé de gestion d'une connexion d'un équipement terminal selon la revendication **10 caractérisé en ce qu'**il comprend :
- Lorsqu'il n'est pas connecté audit réseau, la réception (T36) d'un message (NCK) de notification de changement d'information de sécurité par l'intermédiaire d'une interface avec un autre réseau de communication, ledit message comprenant un délai de reconnexion (DX) audit réseau, ledit délai expirant au plus tôt à la fin du délai de désactivation (DD) de la première information de sécurité (PSK1, JK1), et
- l'émission (T37) d'un message de requête de reconnexion au réseau de communication (RC) dans ledit délai (DX).

12. Procédé de gestion d'une connexion d'un équipement terminal selon l'une des revendications **10** et **11, caractérisé en ce qu'**il comprend en outre la détermination (T32) d'un instant d'émission dudit message de requête de réauthentification (RRA) à destination dudit équipement d'accès dans le délai de réauthentification (DR).

13. Dispositif (200) de gestion d'une connexion d'un équipement terminal (STA) à un réseau de communication (RC), comprenant un équipement d'accès (PA) audit réseau, ladite connexion étant sécurisée par une première information de sécurité (PSK1, JK1), **caractérisé en ce que** ledit dispositif est configuré pour :
- recevoir un message (CRA) de commande de réauthentification en provenance de l'équipement d'accès via une connexion audit réseau, ledit message comprenant au moins une deuxième information de sécurité et un délai de réauthentification (DR), ledit délai expirant au plus tôt à la fin du délai de désactivation (DD) de la première information de sécurité (PSK1, JK1); et
- émettre dans le délai de réauthentification un message (RRA) de requête de réauthentification à destination dudit équipement d'accès comprenant la deuxième information de sécurité (PSK2, JK2).

14. Equipement terminal (STA) apte à être connecté à un réseau de communication (RC) par un équipement d'accès (PA) audit réseau, **caractérisé en ce qu'**il comprend un dispositif de gestion (200) d'une connexion selon la revendication **13.**

15. Produit programme d'ordinateur comprenant des instructions de code de programme pour la mise en œuvre d'un procédé selon l'une quelconque des revendications **1** à **7** et **10** à **12,** lorsqu'il est exécuté par un processeur.

## Patentansprüche

1. Verfahren zur Verwaltung einer Sicherheitsinformation, der sogenannten ersten Sicherheitsinformation (PSK1, JK1), die dazu bestimmt ist, eingesetzt zu werden, um eine gesicherte Verbindung zwischen mindestens einem Endgerät (STA) und einem Zugangsgerät (PA) zu einem Kommunikationsnetz (RC) herzustellen, wobei die erste Sicherheitsinformation (PSK1, JK1) mit einer Gültigkeitsdauer (DV1) verbunden ist, **dadurch gekennzeichnet, dass** das Verfahren von dem Zugangsgerät umgesetzt wird und dass es Folgendes aufweist:
- Nach Ablauf der Gültigkeitsdauer (DV1) das Erhalten (P21) einer zweiten Sicherheitsinformation (PSK2, JK2) und das Auslösen (P22) einer Deaktivierungsfrist (DD) der ersten Sicherheitsinformation (PSK1, JK1);
- wenn ein Endgerät mit dem Zugangsgerät verbunden ist, das Übertragen (P24) einer Steuernachricht zur Neuauthentifizierung (CRA), die mindestens die zweite Sicherheitsinformation und eine Neuauthentifizierungsfrist (DR) enthält, an das Endgerät, wobei die Neuauthentifizierungsfrist spätestens am Ende der Deaktivierungsfrist der ersten Sicherheitsinformation abläuft; und
- wenn eine vom Endgerät stammende Anforderungsnachricht zur Neuauthentifizierung (RRA) vor Ablauf der Neuauthentifizierungsfrist empfangen wird (P25), das erneute Authentifizieren (P27) des Endgeräts mithilfe der zweiten Sicherheitsinformation, ohne die Verbindung zu beenden.

2. Verfahren zur Verwaltung einer Sicherheitsinformation nach Anspruch 1, **dadurch gekennzeichnet, dass** nach dem Auslösen der Deaktivierungsfrist (DD) bei Empfang einer Anforderungsnachricht für die Herstellung einer Verbindung (RCNX) von einem Endgerät (STA), die die erste Sicherheitsinformation (PSK1, JK1) enthält, das Verfahren ein Überprüfen (P26) von mindestens einer Wiederverbindungsbedingung (CND) aufweist, wobei die mindestens eine Bedingung mindestens das Nicht-Ablaufen einer vorbestimmten Wiederverbindungsfrist (DX) aufweist, wobei die Wiederverbindungsfrist frühestens am Ende der Deaktivierungsfrist der ersten Sicherheitsinformation abläuft, und wenn die mindestens eine Wiederverbindungsbedingung erfüllt ist:
- das Herstellen (P31) der Verbindung des Endgeräts auf der Grundlage der ersten Sicherheitsinformation (PSK1, JK1);
- das Übertragen (P24) einer Anforderungsnachricht zur Neuauthentifizierung (CRA), die mindestens die zweite Sicherheitsinformation (PSK2, JK2) und eine Neuauthentifizierungsfrist (DR) enthält, an das Endgerät; und
- das Beenden (P28) der Verbindung, wenn die Neuauthentifizierungsfrist abgelaufen ist.

3. Verfahren zur Verwaltung einer Sicherheitsinformation nach Anspruch 2, **dadurch gekennzeichnet, dass** die Wiederverbindungsfrist (DX) am Ende der Deaktivierungsfrist (DD) der ersten Sicherheitsinformation (PSK1, JK1) abläuft.

4. Verfahren zur Verwaltung einer Sicherheitsinformation nach Anspruch 2, **dadurch gekennzeichnet, dass** die Wiederverbindungsfrist (DX) am Ende einer Schonfrist (DG) abläuft, die bei Ablauf der Deaktivierungsfrist (DD) der ersten Sicherheitsinformation ausgelöst wird.

5. Verfahren zur Verwaltung einer Sicherheitsinformation nach Anspruch 4, **dadurch gekennzeichnet, dass**, da das Endgerät (STA) zuvor im Netz (RC) in Verbindung mit einer Vertrauensinformation (IC) registriert wurde, der Schritt des Überprüfens mindestens einer Wiederverbindungsbedingung (CND) außerdem überprüft, dass die Vertrauensinformation auf einen Wert "vertrauenswürdig " gesetzt ist.

6. Verfahren zur Verwaltung einer Sicherheitsinformation nach Anspruch 5, **dadurch gekennzeichnet, dass** es das Bestimmen (P23) einer Liste (LST) von mindestens einem Endgerät aufweist, das im Netz mit der Vertrauensinformation "vertrauenswürdig" vor dem Auslösen der Deaktivierungsfrist der ersten Sicherheitsinformation registriert wurde und das noch keine Verbindungsanforderung gesendet hat, und das Senden (P33) einer Benachrichtigungsnachricht an das mindestens eine Endgerät vor Ablauf der Schonfrist.

7. Verfahren zur Verwaltung einer Sicherheitsinformation nach Anspruch 6, **dadurch gekennzeichnet, dass** nach Ablauf der Schonfrist eine weitere Schonfrist (DGS) ausgelöst wird, solange die Liste (LST) nicht leer ist.

8. Vorrichtung (100) zur Verwaltung einer Sicherheitsinformation, der sogenannten ersten Sicherheitsinformation (JK1), die dazu bestimmt ist, eingesetzt zu werden, um eine gesicherte Verbindung zwischen mindestens einem Endgerät (STA) und einem Zugangsgerät (PA) zu einem Kommunikationsnetz (RC) herzustellen, wobei die erste Sicherheitsinformation mit einer Gültigkeitsdauer (DV) verbunden ist, **dadurch gekennzeichnet, dass** sie konfiguriert ist, um:
- nach Ablauf der ersten Gültigkeitsdauer eine zweite Sicherheitsinformation (JK2) zu erhalten und eine Deaktivierungsfrist (DD) für die erste Sicherheitsinformation auszulösen;
- wenn ein Endgerät (STA) mit dem Zugangsgerät verbunden ist, eine Anforderungsnachricht zur Neuauthentifizierung (CRA), die mindestens die zweite Sicherheitsinformation (PSK2, JK2) und eine Neuauthentifizierungsfrist (DR) enthält, an das Endgerät zu übertragen, wobei die Neuauthentifizierungsfrist spätestens am Ende der Deaktivierungsfrist (DD) der ersten Sicherheitsinformation abläuft; und
- wenn eine vom Endgerät stammende Anforderungsnachricht zur Neuauthentifizierung (RRA) vor Ablauf der Neuauthentifizierungsfrist empfangen wird, das Endgerät mithilfe der zweiten Sicherheitsinformation erneut zu authentifizieren (P27), ohne die Verbindung zu beenden.

9. Zugangsgerät (PA) zu einem Kommunikationsnetz (RC), **dadurch gekennzeichnet, dass** es eine Vorrichtung (100) zur Verwaltung einer Sicherheitsinformation nach Anspruch 8 aufweist.

10. Verfahren zur Verwaltung einer Verbindung eines Endgeräts (STA) zu einem Kommunikationsnetz (RC), das ein Zugangsgerät (PA) für dieses Netz aufweist, wobei die Verbindung durch eine erste Sicherheitsinformation (PSK1, JK1) gesichert ist, wobei das Verfahren von dem Endgerät durchgeführt wird und Folgendes aufweist:
- Wenn eine Verbindung zu dem Netz besteht, Empfangen (T31) einer vom Zugangsgerät stammenden Steuernachricht zur Neuauthentifizierung (CRA) über eine Verbindung zum Kommunikationsnetz, die mindestens eine zweite Sicherheitsinformation (PSK2, JK2) und eine Neuauthentifizierungsfrist (DR) enthält, die kleiner oder gleich einer Deaktivierungsfrist (DD) der ersten Sicherheitsinformation ist, und
- Senden (T33), innerhalb der Neuauthentifizierungsfrist (DR), einer Anforderungsnachricht zur Neuauthentifizierung (RRA) an das Zugangsgerät, die die zweite Sicherheitsinformation (JK2) enthält, und Speichern (T34) der zweiten Sicherheitsinformation (PSK2, JK2) anstelle der ersten Sicherheitsinformation.

11. Verfahren zur Verwaltung einer Verbindung eines Endgeräts nach Anspruch 10, **dadurch gekennzeichnet, dass** es Folgendes aufweist:
- Wenn es nicht mit dem Netz verbunden ist, das Empfangen (T36) einer Benachrichtigungsnachricht (NCK) bezüglich einer Änderung der Sicherheitsinformation über eine Schnittstelle mit einem anderen Kommunikationsnetz, wobei die Nachricht eine Wiederverbindungsfrist (DX) für das Netz enthält, wobei die Frist frühestens am Ende der Deaktivierungsfrist (DD) der ersten Sicherheitsinformation (PSK1, JK1) abläuft, und
- das Senden (T37) einer Anforderungsnachricht für eine Wiederverbindung mit dem Kommunikationsnetz (RC) innerhalb der genannten Frist (DX).

12. Verfahren zur Verwaltung einer Verbindung eines Endgeräts nach einem der Ansprüche 10 und 11, **dadurch gekennzeichnet, dass** es darüber hinaus das Bestimmen (T32) eines Zeitpunkts des Sendens der Anforderungsnachricht zur Neuauthentifizierung (RRA) an das Zugangsgerät innerhalb der Neuauthentifizierungsfrist (DR) aufweist.

13. Vorrichtung (200)zur Verwaltung einer Verbindung eines Endgeräts (STA) zu einem Kommunikationsnetz (RC), das ein Zugangsgerät (PA) für dieses Netz aufweist, wobei die Verbindung durch eine erste Sicherheitsinformation (PSK1, JK1) gesichert ist, **dadurch gekennzeichnet, dass** die Vorrichtung konfiguriert ist, um:
- eine vom Zugangsgerät stammende Steuernachricht zur Neuauthentifizierung (CRA) über eine Verbindung zu dem Netz zu empfangen, wobei die Nachricht mindestens eine zweite Sicherheitsinformation und eine Neuauthentifizierungsfrist (DR) aufweist, wobei die Frist frühestens am Ende der Deaktivierungsfrist (DD) der ersten Sicherheitsinformation (PSK1, JK1) abläuft; und
- innerhalb der Neuauthentifizierungsfrist eine Anforderungsnachricht zur Neuauthentifizierung (RRA) an das Zugangsgerät zu senden, die die zweite Sicherheitsinformation (PSK2, JK2) enthält.

14. Endgerät (STA), das geeignet ist, mit einem Kommunikationsnetz (RC) über ein Zugangsgerät (PA) zu diesem Netz verbunden zu werden, **dadurch gekennzeichnet, dass** es eine Vorrichtung (200) zur Verwaltung einer Verbindung nach Anspruch 13 aufweist.

15. Computerprogrammprodukt, das Programmcodeanweisungen aufweist, die bei seiner Ausführung durch einen Prozessor das Verfahren nach einem der Ansprüche 1 bis 7 und 10 bis 12 ausführen.

## Claims

1. Method for managing security information, referred to as first security information (PSK1, JK1), intended to be implemented in order to establish a secure connection between at least one terminal equipment (STA) and an access equipment (PA) for accessing a communication network (RC), said first security information (PSK1, JK1) being associated with a validity period (DV1), **characterized in that** said method is implemented by said access equipment and **in that** it comprises:
- upon expiry of the validity period (DV1), obtaining (P21) second security information (PSK2, JK2) and triggering (P22) a deactivation deadline (DD) for the first security information (PSK1, JK1);
- if a said terminal equipment is connected to the access equipment, transmitting (P24), to said terminal equipment, a reauthentication command message (CRA) comprising at least the second security information and a reauthentication deadline (DR), said reauthentication deadline expiring at the latest at the end of said deactivation deadline for the first security information; and
- if a reauthentication request message (RRA) is received (P25) from the terminal equipment before the expiry of the reauthentication deadline, reauthenticating (P27) the terminal equipment using the second security information without terminating the connection.

2. Method for managing security information according to Claim 1, **characterized in that**, following the triggering of the deactivation deadline (DD), upon receipt of a message (RCNX) requesting establishment of a connection from a terminal equipment (STA) comprising said first security information (PSK1, JK1), the method comprises checking (P26) at least one reconnection condition (CND), said at least one condition comprising at least the non-expiry of a predetermined reconnection deadline (DX), said reconnection deadline expiring at the earliest at the end of the deactivation deadline for the first security information, and if said at least one reconnection condition is satisfied:
- establishing (P31) the connection of the terminal equipment on the basis of the first security information (PSK1, JK1);
- transmitting (P24), to said terminal equipment, a reauthentication request message (CRA) comprising at least the second security information (PSK2, JK2) and a reauthentication deadline (DR); and
- terminating (P28) the connection upon expiry of the reauthentication deadline.

3. Method for managing security information according to Claim 2, **characterized in that** the reconnection deadline (DX) expires at the end of the deactivation deadline (DD) for the first security information (PSK1, JK1).

4. Method for managing security information according to Claim 2, **characterized in that** the reconnection deadline (DX) expires at the end of a grace period (DG) triggered upon expiry of the deactivation deadline (DD) for the first security information.

5. Method for managing security information according to Claim 4, **characterized in that**, with said terminal equipment (STA) having been previously registered in the network (RC) in association with trust information (IC), said step of checking at least one reconnection condition (CND) furthermore checks that the trust information is set to a value "trusted".

6. Method for managing security information according to Claim 5, **characterized in that** it comprises determining (P23) a list (LST) of at least one terminal equipment registered in the network with the trust information set to the value "trusted" prior to triggering the deactivation deadline for the first security information and having not yet transmitted a connection request, and transmitting (P33) a notification message to said at least one terminal equipment before the expiry of the grace period.

7. Method for managing security information according to Claim 6, **characterized in that**, upon expiry of the grace period, an additional grace period (DGS) is triggered as long as the list (LST) is not empty.

8. Device (100) for managing security information, referred to as first security information (JK1), intended to be implemented in order to establish a secure connection between at least one terminal equipment (STA) and an access equipment (PA) for accessing a communication network (RC), said first security information being associated with a first validity period (DV), **characterized in that** it is configured:
- upon expiry of the first validity period, to obtain second security information (JK2) and trigger a deactivation deadline (DD) for the first security information;
- if a said terminal equipment (STA) is connected to the access equipment, to transmit, to said terminal equipment, a reauthentication request message (CRA) comprising at least the second security information (PSK2, JK2) and a reauthentication deadline (DR), said reauthentication deadline expiring at the latest at the end of said deactivation deadline (DD) for the first security information; and
- if a reauthentication request message (RRA) is received from the terminal equipment before the expiry of the reauthentication deadline, to reauthenticate (P27) the terminal equipment using the second security information without terminating the connection.

9. Access equipment (PA) for accessing a communication network (RC), **characterized in that** it comprises a device (100) for managing security information according to Claim 8.

10. Method for managing a connection of a terminal equipment (STA) to a communication network (RC), comprising an access equipment (PA) for accessing said network, said connection being secured by first security information (PSK1, JK1), said method being implemented by said terminal equipment and comprising:
- when it is connected to said network, receiving (T31), from said access equipment and via a connection to the communication network, a reauthentication command message (CRA) comprising at least one second item of security information (PSK2, JK2) and a reauthentication deadline (DR) shorter than or equal to a deactivation deadline (DD) for the first security information, and
- transmitting (T33), within the reauthentication deadline (DR), a reauthentication request message (RRA) to said access equipment comprising the second security information (JK2), and recording (T34) the second security information (PSK2, JK2) in place of the first security information.

11. Method for managing a connection of a terminal equipment according to Claim 10, **characterized in that** it comprises:
- when it is not connected to said network, receiving (T36) a message (NCK) notifying a change of security information via an interface with another communication network, said message comprising a reconnection deadline (DX) for reconnecting to said network, said deadline expiring at the earliest at the end of the deactivation deadline (DD) for the first security information (PSK1, JK1), and
- transmitting (T37) a reconnection request message to reconnect to the communication network (RC) within said deadline (DX).

12. Method for managing a connection of a terminal equipment according to either of Claims 10 and 11, **characterized in that** it furthermore comprises determining (T32) a time of transmission of said reauthentication request message (RRA) to said access equipment within the reauthentication deadline (DR).

13. Device (200) for managing a connection of a terminal equipment (STA) to a communication network (RC), comprising an access equipment (PA) for accessing said network, said connection being secured by first security information (PSK1, JK1), **characterized in that** said device is configured:
- to receive a reauthentication command message (CRA) from the access equipment via a connection to said network, said message comprising at least one second item of security information and a reauthentication deadline (DR), said deadline expiring at the earliest at the end of the deactivation deadline (DD) for the first security information (PSK1, JK1); and
- to transmit, within the reauthentication deadline, a reauthentication request message (RRA) to said access equipment comprising the second security information (PSK2, JK2).

14. Terminal equipment (STA) able to be connected to a communication network (RC) by an access equipment (PA) for accessing said network, **characterized in that** it comprises a device (200) for managing a connection according to Claim 13.

15. Computer program product comprising program code instructions for implementing a method according to any one of Claims 1 to 7 and 10 to 12 when it is executed by a processor.
